# EUROPEAN PATENT APPLICATION

(11) **EP 3 525 417 A1**
(43) Date of publication of application: **14.08.2019**
(21) Application number: 17866315.9
(22) Date of filing: 02.08.2017
(51) Int. Cl.: H04L 29/08

(54) **DATA PROCESSING METHOD, DEVICE, STORAGE MEDIUM, ELECTRONIC DEVICE AND SERVER**

(30) Priority: 25.10.2016 CN 201610940989
(71) Applicant: Guangdong Oppo Mobile Telecommunications Corp., Ltd, Dongguan, Guangdong 523860 (CN)
(72) Inventor: LIU, Kun, Dongguan Guangdong 523860 (CN)
(74) Representative: Manitz Finsterwald Patent- und Rechtsanwaltspartnerschaft mbB
(86) International application number: PCT/CN2017/095624
(87) International publication number: WO 2018/076866

(57) **Abstract**

A data synchronization method, comprising: transmitting a data synchronization request to a server, such that the server obtains load information based on the data synchronization request and returns response information based on the load information; receiving the response information returned by the server, the response information comprising indication information indicating whether synchronization is allowed; when the indication information is indication information indicating that synchronization is allowed, synchronizing target data to the server. The present invention also relates to a data synchronization device, a storage medium, an electronic device and a server.

## Description

### CROSS REFERENCE TO RELATED APPLICATION

This application claims a priority to Chinese Patent Application No. 201610940989.3, filed with the State Intellectual Property Office of P. R. China on October 25, 2016, and titled with "data synchronization methods and devices", the entire contents of which are incorporated herein by reference.

### TECHNICAL FIELD

The present disclosure relates to a field of communication technologies, and more particularly, to a data synchronization method, a data synchronization device, a storage medium, an electronic device, and a server.

### BACKGROUND

As the development of the Internet and mobile communication networks, along with the improvement of processing and storage capabilities of terminals, a large number of applications (APPs) have been rapidly spread and used. Commonly-used APPs are convenient for the daily life and work of users, and many newly-developed APPPs also enter the daily life of users, improving life quality of users, using frequency of terminals, and use of entertainment.

Data synchronization is usually based on a "client-server" architecture. However, with the synchronization service adapting this architecture, it is easy to have a very slow response or even a synchronous service interruption, when a large number of clients access the server.

### DISCLOSURE OF THE INVENTION

### Technical Problem

Embodiments of the present disclosure provide a data synchronization method, a data synchronization device, a storage medium, an electronic device and a server, which may reduce the load when synchronizing data.

### SOLUTION OF PROBLEM

### Technical Solution

As a first aspect, embodiments of the present disclosure provide a data synchronization method. The method includes the following.

A data synchronization request is sent to a server, such that the server acquires load information based on the data synchronization request and returns a response message based on the load information.

The response message from the server is received. The response message includes indication information for indicating whether synchronization is permitted.

Target data is synchronized to the server when the indication information indicates that the synchronization is permitted.

As a second aspect, embodiments of the present disclosure provide another data synchronization method. The method includes the following.

A data synchronization request from a terminal is received.

Current load information is acquired based on the data synchronization request.

A response message is sent to the terminal based on the load information. The response message includes indication information for indicating whether synchronization is permitted.

Target data from the terminal is received and saved based on the indication information.

As a third aspect, embodiments of the present disclosure provide a data synchronization device. The device includes: a request sending module, an information receiving module, and a synchronizing module.

The request sending module is configured to send a data synchronization request to a server, such that the server acquires load information based on the data synchronization request and returns a response message based on the load information.

The information receiving module is configured to receive the response message from the server. The response message includes indication information for indicating whether synchronization is permitted.

The synchronizing module is configured to synchronize target data to the server when the indication information indicates that the synchronization is permitted.

As a fourth aspect, embodiments of the present disclosure provide another data synchronization device. The device includes: a request receiving module, an information acquiring module, an information sending module, and a data processing module.

The request receiving module is configured to receive a data synchronization request from a terminal.

The information acquiring module is configured to acquire current load information based on the data synchronization request.

The information sending module is configured to send a response message to the terminal based on the load information. The response message includes indication information for indicating whether synchronization is permitted.

The data processing module is configured to receive and save target data from the terminal based on the indication information.

As a fifth aspect, embodiments of the present disclosure also provide a storage medium. The storage medium is applicable to a terminal. The storage medium has stored a plurality of instructions. The plurality of instructions is adaptable to be loaded by a processor to perform the above data synchronization method.

As a sixth aspect, embodiments of the present disclosure also provide a storage medium. The storage medium is applicable to a server. The storage medium has stored a plurality of instructions. The plurality of instructions is adaptable to be loaded by a processor to perform the above data synchronization method.

As a seventh aspect, embodiments of the present disclosure provide an electronic device. The electronic device includes a processor and a memory. The processor is electrically coupled to the memory. The memory is configured to store instructions and data. The processor is configured to perform the following operations.

A data synchronization request is sent to a server, such that the server acquires load information based on the data synchronization request and returns a response message based on the load information.

The response message from the server is received. The response message includes indication information for indicating whether synchronization is permitted.

Target data is synchronized to the server when the indication information indicates that the synchronization is permitted.

As an eighth aspect, embodiments of the present disclosure provide a server. The server includes a processor and a memory. The processor is electrically coupled to the memory. The memory is configured to store instructions and data. The processor is configured to perform the following operations.

A data synchronization request from a terminal is received.

Current load information is acquired based on the data synchronization request.

A response message is sent to the terminal based on the load information. The response message includes indication information for indicating whether synchronization is permitted.

Target data from the terminal is received and saved based on the indication information.

### ADVANTAGEOUS EFFECT OF THE INVENTION

### Advantageous Effect

Embodiments of the present disclosure provide a data synchronization method, a data synchronization device, a storage medium, an electronic device and a server, which may reduce the load when synchronizing data.

### BRIEF DESCRIPTION OF THE DRAWINGS

### Drawings

FIG. 1 is a first flow chart illustrating a data synchronization method according to an embodiment of the present disclosure.
FIG. 2 is a first schematic diagram illustrating a scene of a data synchronization method according to an embodiment of the present disclosure.
FIG. 3 is a second flow chart illustrating a data synchronization method according to an embodiment of the present disclosure.
FIG. 4 is a block diagram illustrating a data synchronization system according to an embodiment of the present disclosure.
FIG. 5 is a third flow chart illustrating a data synchronization method according to an embodiment of the present disclosure.
FIG. 6 is a first block diagram illustrating a data synchronization device according to an embodiment of the present disclosure.
FIG. 7 is a second block diagram illustrating a data synchronization device according to an embodiment of the present disclosure.
FIG. 8 is a block diagram illustrating an electronic device according to an embodiment of the present disclosure.
FIG. 9 is a block diagram illustrating a server according to an embodiment of the present disclosure.

### PREFERRED EMBODIMENT FOR IMPLEMENTING THE INVENTION

### Preferred Embodiment of the Invention

The technical solutions in the embodiments of the present disclosure are clearly and completely described in the following with reference to the drawings in the embodiments of the present disclosure. The embodiments described are only a part of the embodiments of the present disclosure, but not all embodiments. All other embodiments obtained by a person skilled in the art based on the embodiments of the present disclosure without creative efforts are within the scope of the present disclosure.

The embodiments of the present invention disclosure a data synchronization method, a data synchronization device, a storage medium, an electronic device, and a server. The details will be made separately below.

A data synchronization method includes the following operations.

A data synchronization request is sent to a server, such that the server acquires load information based on the data synchronization request and returns a response message based on the load information.

The response message from the server is received. The response message includes indication information for indicating whether synchronization is permitted.

target data is synchronized to the server When the indication information indicates that the synchronization is permitted.

In some embodiments, the response message further includes time information corresponding to the indication information. The method further includes the following operations.

the data synchronization request is sent to the server again based on the time information When the indication information is not preset indication information.

In some embodiments, the sending the data synchronization request to the server again based on the time information includes the following operations.

A synchronization time of the target data is adjusted based on the time information.

The data synchronization request is sent to the server again based on the adjusted synchronization time.

In some embodiments, before the sending the data synchronization request to the server, the method further includes the following operations.

An account login request is sent to the server. The account login request carries a target backup account and authentication information of the target backup account.

A login response message from the server is received based on the account login request, and it logs into the target backup account based on the login response message.

The present embodiment will be described from the perspective of a data synchronization device. The data synchronization device may be integrated into a terminal or other device that needs data backup. The terminal may be a mobile phone, a tablet computer, or the like.

The manner of integrating the data synchronization device into the terminal may be various. For example, the data synchronization device may be installed into the terminal in the form of a terminal application.

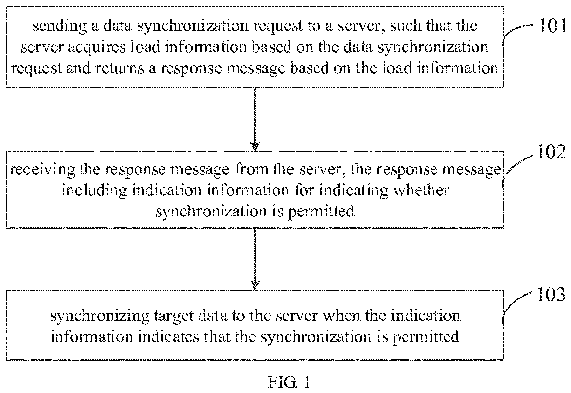

In some embodiments, a data synchronization method is provided. As illustrated in FIG. 1. a flow of the data synchronization method may be as follows.

At block 101, a data synchronization request is sent to a server, such that the server acquires load information based on the data synchronization request and returns a response message based on the load information.

In some embodiments, before the operation at block 101, the method in this embodiment may further include a process of logging into a target backup account, as follows.

An account login request is sent to the server. The account login request carries a target backup account and authentication information of the target backup account.

A login response message from the server is received based on the account login request, and it logs into the target backup account based on the login response message.

In some embodiments, the backup account and the authentication information of the backup account may be acquired, and the account login request is sent to the cloud server based on the target backup account and the authentication information of the target backup account.

The manner of acquiring the backup account and authentication information may be various. For example, the backup account and authentication information may be input by the user, i.e., the backup account and authentication information input by the user may be acquired, or the backup account and authentication information may be automatically acquired, such as the backup account and authentication information may be automatically acquired from a local storage of the terminal or from the server.

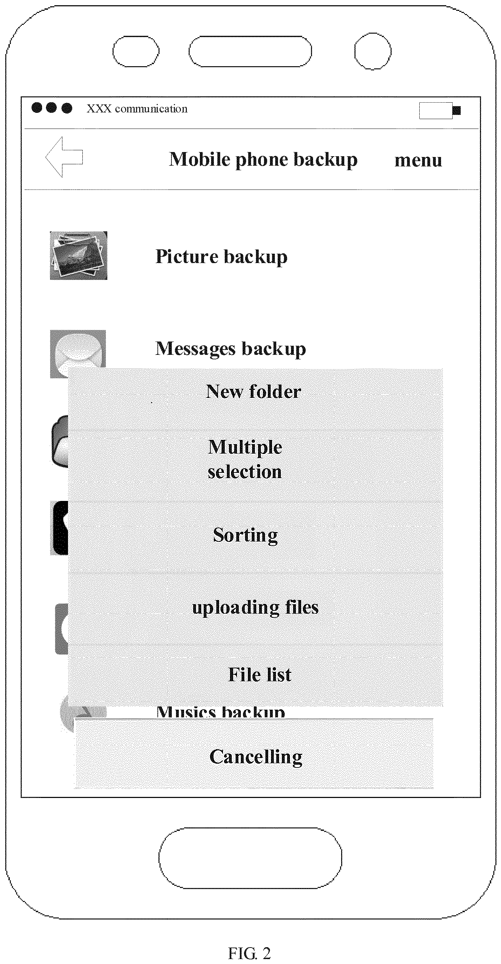

In this embodiment, the manner of sending the data synchronization request to the server may be various. For example, the data synchronization request may be triggered by an operation of the user, or may be triggered by the system. For example, as illustrated in FIG. 2, after logging into the target backup account, a menu is clicked and a drop-down list of the menu is entered, and "uploading files" in the list is selected to jump to a file interface in the terminal. The file interface may display all data which is allowed to be synchronized, such as pictures, videos. After selecting the target data to be synchronized, a backup control is clicked and the backup control triggers the terminal to send the data synchronization request to the server.

The data synchronization request may carry information such as an account identifier (such as an account identification code) of the backup account of the terminal, a data type of the target data, and a data size. The medium for sending the data synchronization request to the server may be various. For example, the data synchronization request may be sent to the server through a data network, a wireless network, or the like.

In an implementation, after receiving the synchronization request sent by the terminal, the server may trigger an information processing instruction. The server may calculate the currently-occupied memory, the currently-occupied central processing unit (CPU), and other resource parameters, based on the information processing instruction, to acquire the corresponding load information. The corresponding response message is returned to the terminal based on the acquired load information.

At block 102, the response message from the server is received. The response message includes indication information for indicating whether synchronization is permitted.

In some embodiments, after the data synchronization request is sent to the server, the response message from the server for the data synchronization request may be received. In an implementation, when the response message from the server is not received within a preset period of time, a message such as "network abnormality", or "request abnormality" may be displayed on a display interface of the terminal.

At block 103, target data is synchronized to the server when the indication information indicates that the synchronization is permitted.

In detail, when the response message from the server is received, it may be determined whether the response message satisfies a synchronization condition. In detail, the indication information may be read from the response message. It is determined whether the indication information indicates that the synchronization is permitted. The method of determining whether the indication information indicates that the synchronization is permitted may be various. For example, the indication information may be parsed. When the indication information is encrypted, the indication information needs to be decrypted based on a preset decryption rule and then is read. The operation of "determining whether the indication information indicates that the synchronization is permitted " may include the following.

The indication information is parsed to acquire a corresponding information identifier.

It is determined whether a sample identifier matching the information identifier exists in a preset identifier set.

When the sample identifier matching the information identifier exists in the preset identifier set, it is determined that the indication information in the response message indicates that the synchronization is permitted.

In an implementation, when the indication information in the response message indicates that the synchronization is permitted, a synchronization instruction may be triggered. The terminal may send the previously-determined target data that needs to be synchronized to the server based on the synchronization instruction, to synchronize the target data to the server.

In some embodiments, when the indication information does not indicate that the synchronization is permitted, in order to improve data synchronization efficiency, the data synchronization request may be sent to the server again, to synchronize the target data to the server.

In some embodiments, the server may return a period of time to the terminal based on a load condition of the server, such that the terminal may send the data synchronization request to the server again after this period of time. The time information may be returned after the terminal receives the response message, or may be integrated into the response message to return to the terminal together with the indication message. That is, the response message may further include time information corresponding to the indication information. The data synchronization method may further include the following.

When the indication information does not indicate that the synchronization is permitted, the data synchronization request is sent again to the server based on the time information.

The time information may be a delay period of time or a waiting period of time. For example, when the time information is lmin (minute), it means that the data synchronization request is sent to the server again after lmin.

In an implementation, the terminal may set an alarm of the scheduled task based on the time information from the server. When the time of the scheduled task is reached, the terminal sends the data synchronization request to the server again. When the server returns the response message permitting synchronization, the data synchronization operation is performed; when the response message still blocks the synchronization, the timed task is set again based on the currently-received time information. The loop is repeated until the server returns the response message permitting the synchronization.

In some embodiments, in view of the fact that the terminal needs to prepare for data transmission after receiving the response message from the server, there is a buffer period of time (i.e., a preset synchronization period of time). Therefore, when the received response message blocks the synchronization, the time of the scheduled task is also adjusted based on the buffer period of time. That is, the operation of "sending the data synchronization request to the server based on the time information" may include the following.

The synchronization time of the target data is adjusted based on the time information.

The synchronization request is sent to the server again based on the adjusted synchronization time.

For example, the buffer period of time is Is (second). When the received time information is 10s, the alarm of the scheduled task may be set to 11 s.

As can be seen from the above, the embodiment of the present disclosure provides the data synchronization method. The data synchronization request is sent to the server, such that the server acquires the load information based on the data synchronization request, and returns the response message based on the load information. The response message from the server is received, and the response messaging includes the indication information for indicating whether the synchronization is permitted. When the indication information indicates that the synchronization is permitted, the target data is synchronized to the server. The solution may determine whether the terminal is permitted to synchronize the data based on the real-time load situation of the server. Compared with the related art, the communication frequency between the terminal and the server may be dynamically adjusted, and the excessive load caused by a large number of terminals simultaneously accessing the server is solved. To a certain extent, the synchronization service interruption may be avoided.

A data synchronization method includes the following operations.

A data synchronization request from a terminal is received.

Current load information is acquired based on the data synchronization request.

A response message is sent to the terminal based on the load information. The response message includes indication information for indicating whether synchronization is permitted.

Target data from the terminal is received and saved based on the indication information.

In some embodiments, the load information includes a load amount. The sending the response message to the terminal based on the load information includes the following.

It is determined whether the load amount is greater than a preset threshold.

When the load amount is greater than the preset threshold, time information is acquired based on the load amount, and the response message is sent to the terminal based on the time information. The response message further includes the time information.

The present embodiment will be described from the perspective of another data synchronization device. This data synchronization device may be integrated into a server or other device that may back up data. The server may be a cloud server or the like.

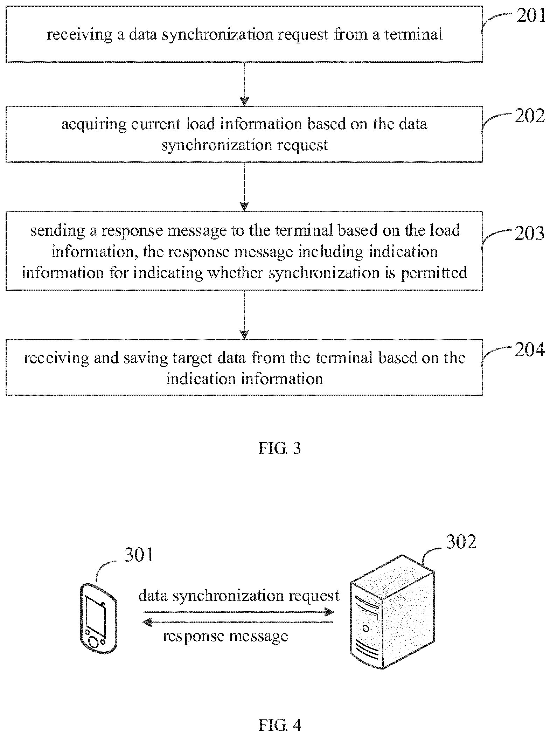

In some embodiments, a data synchronization method is provided. As illustrated in FIG. 3. A flow of the data synchronization method may be as follows.

At block 201, a data synchronization request from a terminal is received.

In an implementation, in order to reduce the server load and maintain the server better, the server is set to receive an information recovery request sent by the terminal only within a preset period of time, and the preset period of time may be maintained by a person skilled in the art or the staff of the server. For example, the preset period of time may be set from 7:00 to 23:00.

The data synchronization request may carry information such as an account identifier (such as an account ID) of the backup account of the terminal, a data type of the target data, and a data size.

At block 202, current load information is acquired based on the data synchronization request.

In detail, after receiving the data synchronization request, an information acquisition instruction may be triggered. The server may acquire its current load information based on the information acquisition instruction. The manner of acquiring the load information may be various. For example, resource parameters such as the currently-occupied memory and the currently-occupied CPU may be calculated to acquire the corresponding load information. For example, a resource monitoring device may be set in the server. When receiving the data synchronization request sent by the terminal, the server may be triggered to call the relevant process to acquire data in a storage area corresponding to the resource monitoring device, and calculate the current load information based on the acquired data. That is, the operation of "acquiring the current load information based on the data synchronization request" may be as follows.

When the data synchronization request is detected, the related process is called to acquire data information in a preset storage area.

The current load information is acquired based on the acquired data information.

The data information may include total resource parameters of different types of resources of the server, such as a total memory running capacity, a CPU frequency, and the like. In addition, information such as the load generated by the current task execution may be included.

At block 203, a response message is sent to the terminal based on the load information. The response message includes indication information for indicating whether synchronization is permitted.

In detail, the server may determine, based on the acquired load information, whether the server has a condition for responding to the data synchronization request of the current terminal.

In an implementation, the current load may be quantized to determine whether the quantized load satisfies the response condition. For example, when it is determined that the current load does not satisfy the response condition, the server is considered to be in a busy state. At this time, the server determines that the server does not currently have the condition for responding to the data synchronization request of the current terminal. The response message may include indication information indicating that the synchronization is not permitted.

In order to improve the data synchronization efficiency, under a case that a synchronization service of the terminal may be ensured without causing the server to be overloaded, the frequency of sending the data synchronization request by the terminal may be adjusted. For example, the frequency of sending the data synchronization request by the terminal may be adjusted by controlling a time interval of sending the data synchronization request by the terminal. That is, the load information includes a load amount; and the operation of "sending the response message to the terminal based on the load information" may include the following.

It is determined whether the load amount is greater than a preset threshold.

When the load amount is greater than the preset threshold, time information is acquired based on the load amount, and the response message is sent to the terminal based on the time information. The response message further includes the time information.

In some embodiments, the time information may be integrated into the response message, and sent to the terminal together with the indication message, such that after receiving the response message, the terminal may send the data synchronization request to the server based on the time information carried by the response message, thereby reducing manual operations, improving data synchronization efficiency, and ensuring that the server is not overloaded.

In some embodiments, the time information may be separated from the response message and sent to the terminal separately. In an implementation, when the server determines that the load amount is not greater than the preset threshold, i.e., the server has the condition for responding to the data synchronization request of the current terminal, the time information may not be calculated and sent, thereby reducing the consumption of the server resources.

At block 204, target data from the terminal is received and saved based on the indication information.

In detail, after the response message is sent to the terminal, the terminal may determine whether the received response message satisfies the synchronization condition. If yes, the terminal may trigger to send the target data to the server, and after receiving the target data, the server saves the target data to a storage area corresponding to the account identifier, to synchronize the target data in the terminal to the server.

As can be seen from the above, the embodiment of the present disclosure provides the data synchronization method. The data synchronization request sent by a terminal is received. The current load information is acquired based on the data synchronization request and the response message is sent to the terminal based on the load information. The response message includes the indication information for indicating whether the synchronization is permitted. The target data from the terminal is received and saved based on the indication information. The solution may send the response message to the terminal based on the current load information, to adjust the synchronization time of the target data in the terminal. Compared with the related art, the synchronization time of the target data in the terminal may be dynamically adjusted, and the excessive load caused by a large number of terminals simultaneously accessing the server is solved. To a certain extent, the synchronization service interruption may be avoided.

In some embodiments, as illustrated in FIG. 4, a data synchronization system is provided. The system includes a terminal 301, and a server 302. The terminal 301 in the system is coupled to the server 302 in the system via a network (such as a wireless network). In other embodiments, the system may also include more terminals.

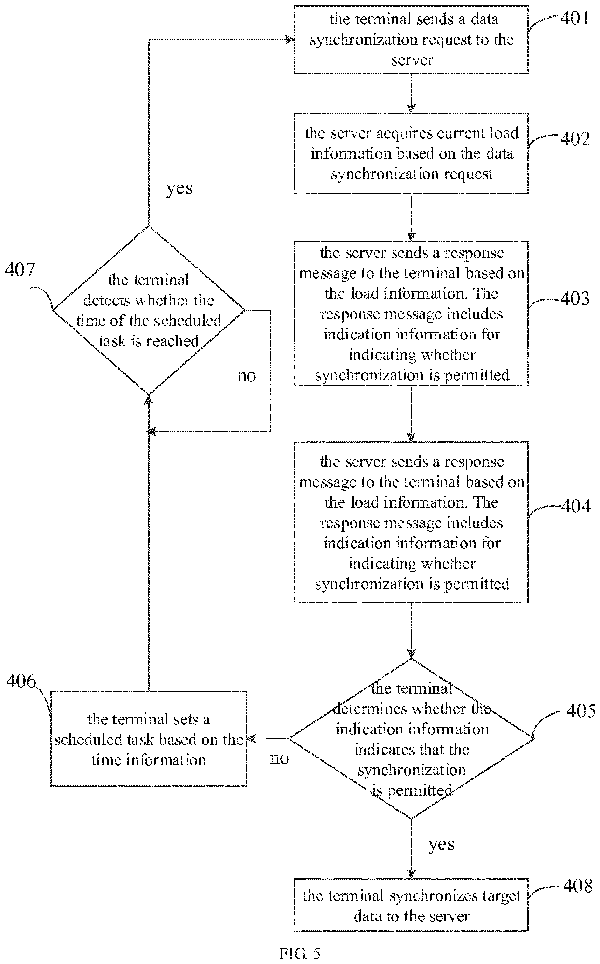

The synchronization method of the present disclosure is described in detail below based on the above data synchronization system. As illustrated in FIG. 5, a flow of the data synchronization method may be as follows.

At block 401, the terminal sends a data synchronization request to the server.

In detail, the data synchronization request may carry information such as an account identifier (such as an account ID) of the backup account of the terminal, a data type of the target data, and a data size. The medium for sending the data synchronization request by the terminal to the server may be various. For example, the data synchronization request may be sent to the server through a data network, a wireless network, or the like.

At block 402, the server acquires current load information based on the data synchronization request.

In detail, after receiving the data synchronization request, an information acquisition instruction may be triggered. The server may acquire its current load information based on the information acquisition instruction. The manner of acquiring the load information by the server may be various. For example, resource parameters such as the currently-occupied memory and the currently-occupied CPU may be calculated to acquire the corresponding load information. For example, a resource monitoring device may be set in the server. When receiving the data synchronization request sent by the terminal, the server may be triggered to call the relevant process to acquire data in a storage area corresponding to the resource monitoring device, and calculate the current load information based on the acquired data. That is, the operation of "acquiring the current load information by the server based on the data synchronization request" may be as follows.

When the data synchronization request is detected, the related process is called by the server to acquire data information in a preset storage area.

The current load information is acquired by the server based on the acquired data information.

The data information may include total resource parameters of different types of resources of the server, such as a total memory running capacity, a CPU frequency, and the like. In addition, information such as the load generated by the current task execution may be included.

At block 403, the server sends a response message to the terminal based on the load information. The response message includes indication information for indicating whether synchronization is permitted.

In detail, the server may determine, based on the acquired load information, whether the server has a condition for responding to the data synchronization request of the current terminal.

In an implementation, the current load may be quantized to determine whether the quantized load satisfies the response condition. For example, when it is determined that the current load does not satisfy the response condition, the server is considered to be in a busy state. At this time, the server determines that the server does not currently have the condition for responding to the data synchronization request of the current terminal. The response message may include indication information indicating that the synchronization is not permitted.

In order to improve the data synchronization efficiency, under a case that a synchronization service of the terminal may be ensured without causing the server to be overloaded, the frequency of sending the data synchronization request by the terminal may be adjusted. For example, the frequency of sending the data synchronization request by the terminal may be adjusted by controlling a time interval of sending the data synchronization request by the terminal. That is, the load information includes the load amount; and the operation of "sending the response message by the server to the terminal based on the load information" may include the following.

It is determined by the server whether the load amount is greater than a preset threshold.

When the load amount is greater than the preset threshold, time information is acquired by the server based on the load amount, and the response message is sent by the server to the terminal based on the time information. The response message further includes the time information.

In some embodiments, the time information may be integrated into the response message, and sent to the terminal together with the indication message, such that after receiving the response message, the terminal may send the data synchronization request to the server based on the time information carried by the response message, thereby reducing manual operations, improving data synchronization efficiency, and ensuring that the server is not overloaded.

In some embodiments, the time information may be separated from the response message and sent to the terminal separately. In an implementation, when the server determines that the load amount is not greater than the preset threshold, i.e., the server has the condition for responding to the data synchronization request of the current terminal, the time information may not be calculated and sent, thereby reducing the consumption of the server resources.

At block 404, the terminal determines whether the indication information indicates that the synchronization is permitted. When yes, the operation at block 408 is performed; and when not, the operation at block 406 is performed.

In detail, when the response message from the server is received, it may be determined whether the response message satisfies a synchronization condition. In detail, the indication information may be read from the response message. It is determined whether the indication information indicates that the synchronization is permitted. The method of determining whether the indication information indicates that the synchronization is permitted may be various. For example, the indication information may be parsed. When the indication information is encrypted, the indication information needs to be decrypted based on a preset decryption rule and then is read. The operation of "determining by the terminal whether the indication information indicates that the synchronization is permitted " may include the following.

The indication information is parsed by the terminal to acquire a corresponding information identifier.

It is determined by the terminal whether a sample identifier matching the information identifier exists in a preset identifier set.

When the sample identifier matching the information identifier exists in the preset identifier set, it is determined by the terminal that the indication information in the response message indicates that the synchronization is permitted.

At block 406, the terminal sets a scheduled task based on the time information.

When the terminal determines that the indication information in the response message is not preset indication information, in order to improve data synchronization efficiency, the terminal may set an alarm of the scheduled task based on the time information from the server, such that after the time of the scheduled task is reached, the terminal may send the data synchronization request to the server again to synchronize the target data to the server.

In some embodiments, in view of the fact that the terminal needs to prepare for data transmission after receiving the response message from the server, there is a buffer period of time (i.e., a preset synchronization period of time). Therefore, when the received response message blocking the synchronization, the time of the scheduled task is also adjusted based on the buffer period of time. That is, the operation of "setting the scheduled task by the terminal based on the time information" may include the following.

The synchronization time of the target data is adjusted based on the time information.

The scheduled task is set based on the adjusted synchronization time.

At block 407, the terminal detects whether the time of the scheduled task is reached. When yes, the operation in block 401 is performed. When not, the detection is continued.

In detail, the method of detecting whether the time of the scheduled task is reached may be various. For example, a time monitoring device may be set to monitor the time of the task in real time. In addition, in order to reduce the power consumption of the terminal, the time of the scheduled task may be detected every preset period of time. The preset period of time may be set by a person skilled in the art or a manufacturer.

At block 408, the terminal synchronizes target data to the server.

In detail, when the terminal determines that the indication information in the response message is the preset indication information, the synchronization instruction may be triggered, and the terminal may send the previously-determined target data that needs to be synchronized to the server based on the synchronization instruction, to synchronize the target data to the server.

As can be seen from the above, the embodiment of the present disclosure provides the data synchronization method. The terminal sends the data synchronization request to the server, and the server acquires the current load information based on the received data synchronization request and sends the response message to the terminal based on the load information. The response message includes the indication information for indicating whether the synchronization is permitted. Further, the terminal determines whether the indication information indicates that the synchronization is permitted, and perform corresponding synchronization operations based on the determining result to synchronize the target data to the server. The solution may determine whether the terminal is permitted to synchronize the data based on the real-time load situation of the server. Compared with the related art, the communication frequency between the terminal and the server may be dynamically adjusted, and the excessive load caused by a large number of terminals simultaneously accessing the server is solved. To a certain extent, the synchronization service interruption may be avoided.

A data synchronization device includes a request sending module, an information receiving module, and a synchronizing module.

The request sending module is configured to send a data synchronization request to a server, such that the server acquires load information based on the data synchronization request and returns a response message based on the load information.

The information receiving module is configured to receive the response message from the server. The response message includes indication information for indicating whether synchronization is permitted.

The synchronizing module is configured to synchronize target data to the server when the indication information indicates that the synchronization is permitted.

In some embodiments, the response message further includes time information corresponding to the indication information.

The request sending module is configured to, send the data synchronization request to the server again based on the time information when the indication information is not preset indication information.

In some embodiments, the request sending module is configured to:
adjust a synchronization time of the target data based on the time information; and
send the data synchronization request to the server again based on the adjusted synchronization time.

In some embodiments, the device further includes a login request sending module and a processing module.

The login request sending module is configured to send an account login request to the server, the account login request carrying a target backup account and authentication information of the target backup account.

The processing module is configured to login a response message from the server based on the account login request, and log into the target backup account based on the login response message.

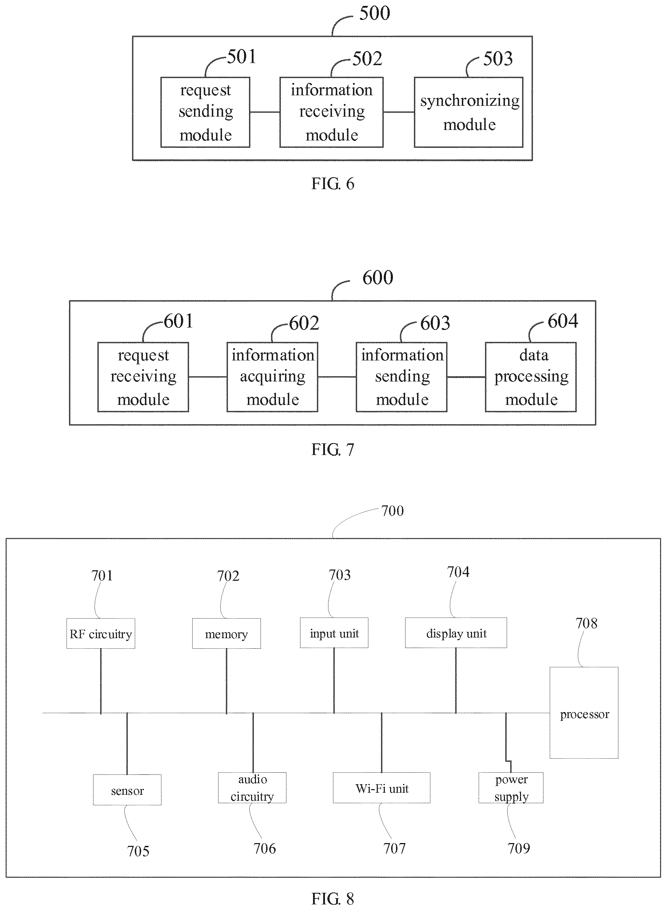

In some embodiments, a data synchronization device is also provided. The data synchronization device may be installed into the terminal. The terminal may include a mobile phone, a tablet computer, a notebook computer, and the like. As illustrated in FIG. 6, the data synchronization device 600 may include a request sending module 501, an information receiving module 502, and a synchronizing module 503.

The request sending module 501 is configured to send a data synchronization request to a server, such that the server acquires load information based on the data synchronization request and returns a response message based on the load information.

The information receiving module 502 is configured to receive the response message from the server. The response message includes indication information for indicating whether synchronization is permitted.

The synchronizing module 503 is configured to synchronize target data to the server when the indication information indicates that the synchronization is permitted.

In some embodiments, the response message further includes time information corresponding to the indication information.

The request sending module 501 is configured to send the data synchronization request to the server again based on the time information, when the indication information is not preset indication information.

In some embodiments, the request sending module 501 is configured to:
adjust a synchronization time of the target data based on the time information; and
send the data synchronization request to the server again based on the adjusted synchronization time.

As can be seen from the above, the embodiment of the present disclosure provides the data synchronization device. The data synchronization request is sent to the server, such that the server acquires the load information based on the data synchronization request, and returns the response message based on the load information. The response message from the server is received, and the response messaging includes the indication information for indicating whether the synchronization is permitted. When the indication information indicates that the synchronization is permitted, the target data is synchronized to the server. The solution may determine whether the terminal is permitted to synchronize the data based on the real-time load situation of the server. Compared with the related art, the communication frequency between the terminal and the server may be dynamically adjusted, and the excessive load caused by a large number of terminals simultaneously accessing the server is solved. To a certain extent, the synchronization service interruption may be avoided.

A data synchronization device includes a request receiving module, an information acquiring module, an information sending module, and a data processing module.

The request receiving module is configured to receive a data synchronization request from a terminal.

The information acquiring module is configured to acquire current load information based on the data synchronization request.

The information sending module is configured to send a response message to the terminal based on the load information. The response message includes indication information for indicating whether synchronization is permitted.

The data processing module is configured to receive and save target data from the terminal based on the indication information.

In some embodiments, the load information includes a load amount. The information sending module is configured to:
determining whether the load amount is greater than a preset threshold;
when the load amount is greater than the preset threshold, acquire time information based on the load amount, and send the response message to the terminal based on the time information, wherein the response message further comprises the time information.

In order to better implement the above method, the embodiments of the present disclosure further provide a data synchronization device. The device may be integrated into a server or other device that may perform data backup. The server may be a cloud server or the like. As illustrated in FIG. 7, the data synchronization device 600 may include: a request receiving module 601, an information acquiring module 602, an information sending module 603, and a data processing module 604.

The request receiving module 601 is configured to receive a data synchronization request from a terminal.

The information acquiring module 602 is configured to acquire current load information based on the data synchronization request.

The information sending module 603 is configured to send a response message to the terminal based on the load information. The response message includes indication information for indicating whether synchronization is permitted.

The data processing module 604 is configured to receive and save target data from the terminal based on the indication information.

In some embodiments, the load information includes a load amount. The information sending module 603 is configured to:
determining whether the load amount is greater than a preset threshold;
when the load amount is greater than the preset threshold, acquire time information based on the load amount, and send the response message to the terminal based on the time information, wherein the response message further comprises the time information.

As can be seen from the above, the embodiment of the present disclosure provides the data synchronization device. The data synchronization request sent by a terminal is received. The current load information is acquired based on the data synchronization request and the response message is sent to the terminal based on the load information. The response message includes the indication information for indicating whether the synchronization is permitted. The target data from the terminal is received and saved based on the indication information. The solution may send the response message to the terminal based on the current load information, to adjust the synchronization time of the target data in the terminal. Compared with the related art, the synchronization time of the target data in the terminal may be dynamically adjusted, and the excessive load caused by a large number of terminals simultaneously accessing the server is solved. To a certain extent, the synchronization service interruption may be avoided.

As illustrated in FIG. 8, in some embodiments, an electronic device 700 is provided. The electronic device 700 may be a mobile phone, and a tablet and the like terminal. The electronic device 700 may be integrated with the data synchronization device according to the first embodiment. The electronic device 700 may include a radio frequency (RF) circuitry 701, a memory 702 having one or more computer readable storage media, an input unit 703, a display unit 704, a sensor 705, an audio circuitry 706, a wireless fidelity (Wi-Fi) unit 707, a processor 708 having one or more processing cores, and a power supply 709. It may be understood by those skilled in the art that, the structures of the electronic device 700 illustrated in FIG. 8 do not limit the structures of the electronic device. The electronic device 700 may include less or more components than those illustrated in FIG. 8 or combinations thereof, or have a different arrangement of components.

The RF circuitry 701 may be configured to receive or transmit messages, or, receive and transmit signals during a call. In detail, after downlink information of the base station is received, it is processed by one or more processors 708; in addition, data related to the uplink is transmitted to the base station. In general, the RF circuitry 701 includes but is not limited to an antenna, at least one amplifier, a tuner, one or more oscillators, a subscriber identity module (SIM), a transceiver, a coupler, a low noise amplifier (LNA), a diplexer and the like. Furthermore, the RF circuitry 701 may be further configured to communicate with other devices via wireless communication and network. The above wireless communication may adopt any one of communication standards or protocols, including but not being limited to global system of mobile communication (GSM), general packet radio service (GPRS), code division multiple access (CDMA), wideband code division multiple access (WCDMA), long term evolution (LTE), e-mail, short messaging service (SMS) and the like.

The memory 702 may be configured to store software programs or modules. The processor 708 is configured to execute various functional applications and data processes by running the software programs and modules stored in the memory 702. The memory 702 may mainly include a program storage region and a data storage region. The program storage region may store an operation system, applications required by at least one function (such as sound playback function, image playback function) and the like. The data storage region may store data (such as audio data, phone book) produced by using the electronic device 700 and the like. In addition, the memory 702 may include a high-speed random-access memory and may include a non-volatility memory, such as at least one disk memory, a flash memory, or other volatility solid state memory. Accordingly, the memory 702 may also include a memory controller to provide access to the memory 702 by the processor 708 and the input unit 703.

The input unit 703 may be configured to receive figures or character information inputted and to generate a keyboard, a mouse, a joystick, an optical or trackball signal input related to a user setup or function control. In detail, the input unit 703 may include a touch panel and other input devices. The touch panel (also called as touch screen) may be configured to gather touch operations near or on the touch panel (such as an operation on the touch panel or near the touch panel of the user with a finger, a stylus or other suitable objects or attachments), and drive corresponding connected device according to a preset program. In an embodiment, the touch panel may include a touch detection device and a touch controller. The touch detection device detects an orientation of the user's touch, detects a signal caused by the touch operation and sends the signal to the touch controller. The touch controller receives the touch information on the touch detection device, converts the touch information to touch point coordinates, and sends the touch point coordinates to the processor 708. Furthermore, the touch controller may receive and execute a command sent from the processor 708. The touch panel may be implemented as resistance typed, capacitive typed, infrared typed and surface acoustic wave typed. In addition to the touch panel, the input unit 703 may further include other input devices. In detail, the other input devices may include but not limited to one or more of a physical keyboard, a functional key (such as a volume control key, a switch key and the like), a trackball, a mouse, a joystick, a fingerprint recognition module, etc.

The display unit 704 may be configured to display information inputted by the user or various graphical user interfaces of the electronic device 700, which may include graphics, text, icons, video, and any combination thereof. The display unit 704 may include a display panel. In an embodiment, the display panel may be configured as a liquid crystal display (LCD), an organic light-emitting diode (OLED) and the like. In an embodiment, the touch panel may cover the display panel. When the touch panel detects the touch operation on the touch panel or near the touch panel, the touch operation is transmitted to the processor 708 to determine a type of the touch event. Thereafter, the processor 708 provides a corresponding visual output on the display panel according to the type of the touch event. Although the touch panel and the display panel are two separate components to realize an input and output function of the electronic device illustrated in FIG. 8, in certain embodiments, the touch panel and the display panel may be integrated to realize the input and output function of the electronic device,

The electronic device 700 may further include at least one sensor 705, such as an optical sensor, a motion sensor and other sensors. In detail, the optical sensor may include a surrounding light sensor and a proximity sensor. The surrounding light sensor may adjust a luminance of the display panel according to surrounding lights. The proximity sensor may close the display panel and/or backlight when the electronic device moves near ears of the user. As the motion sensor, an acceleration sensor may be configured to measure acceleration values in various directions (generally in three axes), measure a value and a direction of gravity when the electronic device is static, and identify the phone gesture applications (such as horizontal and vertical screen switching, related games, magnetometer attitude calibration), identify, based on vibration, related functions (such as pedometer, percussion), and the like. Furthermore, the electronic device may be configured with a gyroscope, a barometer, a humidity meter, a thermometer, an infrared sensor, which are not elaborated in embodiments of the present disclosure.

The audio circuitry 706 may provide an audio interface between the user and the phone through a loudspeaker and a microphone. The audio circuitry 706 may transmit electrical signals converted from received audio data to the loudspeaker. The loudspeaker converts the electrical signals to sound signals and outputs the sound signals. In another aspect, the microphone may convert collected sound singles to electrical signals. The audio circuitry 706 receives and converts the electrical signals to audio data and outputs the audio data to the processor 708 to be processed. The audio data processed by the processor 708 may be transmitted to for example another phone via the RF circuitry 701 or may be stored in the memory 702 for subsequently processing. The audio circuitry 706 may also include an earbud jack to provide communication of the peripheral earphones with the electronic device 700.

Wi-Fi is a short distance wireless communication technology. The electronic device 700 may help the user to receive or send an e-mail, search webpages, access stream medium via the Wi-Fi unit 707. The Wi-Fi unit 707 provides a wireless broadband Internet access. Although the Wi-Fi unit 707 is illustrated in FIG. 8, it may be understood that, the Wi-Fi unit 707 is not necessary for the phone, thus it may be omitted based on demands without changing the scope of the present disclosure.

The processor 708 is a control center of the electronic device 700, which utilizes various interfaces and wires to connect various parts of the electronic device 700. By running or executing the software program and/or modules stored in the memory 702, and by invoking data stored in the memory 702, the various functions and data processing functions may be executed, thus integrally monitoring the electronic device 700. In an embodiment, the processor 708 may include one or more processing cores. In an embodiment, the processor 708 may be integrated with an application processor or a modem processor. The application processor mainly processes the operation system, a user interface and an application. The modem processor mainly processes wireless communication. It may be understood that, the above modem controller may be not integrated in the processor 708.

The electronic device 700 may further includes a power supply 709 (such as a battery) for providing powers to various parts of the electronic device. Alternatively, the power supply may be logically connected to a power management system and the processor 708, thereby managing a charging, discharging and power consumption via the power management system. The power supply 709 may also include any one or more of a DC (Direct Voltage) or AC (Alternating Voltage) power source, a recharging system, a power failure detection circuit, a power converter or inverter, a power status indicator, and the like.

Although not illustrated, the electronic device 700 may further include a camera, a Bluetooth module and the like, which are not elaborated herein.

In embodiments of the present disclosure, the processor 708 in the electronic device 700 loads the executable file corresponding to the process of one or more programs into the memory 702 according to the following instructions, and the processor 708 runs the programs stored in the memory 702 to achieve various functions as follows.

A data synchronization request is sent to a server, such that the server acquires load information based on the data synchronization request and returns a response message based on the load information. The response message from the server is received. The response message includes indication information for indicating whether synchronization is permitted. Target data is synchronized to the server when the indication information indicates that the synchronization is permitted.

In some embodiments, the response message further includes time information corresponding to the indication information. The processor 708 may achieve the following functions. The data synchronization request is sent to the server again based on the time information when the indication information is not preset indication information.

In some embodiments, the processor 708 may achieve the following functions. A synchronization time of the target data is adjusted based on the time information. The data synchronization request is sent to the server again based on the adjusted synchronization time.

In some embodiments, the processor 708 may achieve the following functions. Before the sending the data synchronization request to the server, an account login request is sent to the server. The account login request carries a target backup account and authentication information of the target backup account.

A login response message from the server is received based on the account login request, and it logs into the target backup account based on the login response message.

As can be seen from the above, the embodiment of the present disclosure provides the electronic device. The data synchronization request is sent by the electronic device to the server, such that the server acquires the load information based on the data synchronization request, and returns the response message based on the load information. The response message from the server is received, and the response messaging includes the indication information for indicating whether the synchronization is permitted. When the indication information indicates that the synchronization is permitted, the target data is synchronized to the server. The solution may determine whether the electronic device is permitted to synchronize the data based on the real-time load situation of the server. Compared with the related art, the communication frequency between the electronic device and the server may be dynamically adjusted, and the excessive load caused by a large number of electronic devices simultaneously accessing the server is solved. To a certain extent, the synchronization service interruption may be avoided.

Embodiments of the present disclosure further provide a storage medium. The storage medium is applicable to a terminal. The storage medium has stored a plurality of instructions. The plurality of instructions is adaptable to be loaded by a processor to perform the above data synchronization method.

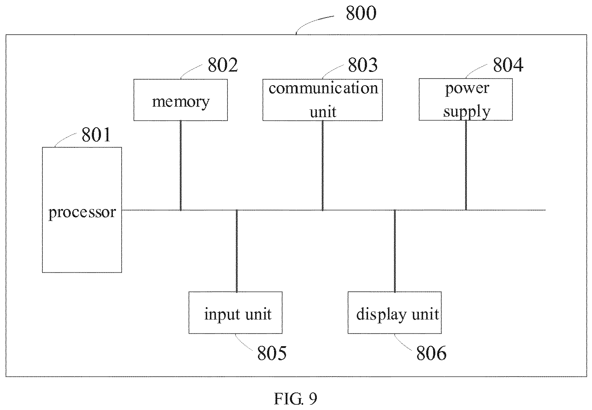

In some embodiments, a server is provided. As illustrated in FIG. 9, it illustrates a block diagram a server according to an embodiment of the present disclosure. The server 800 may include a processor 801 having one or more processing cores, a memory 802 having one or more computer readable storage media, a communication unit 803, a power supply 804, an input unit 805, and a display unit 806 and the like. It should be understood by a person skilled in the art that the structure of the server illustrated in FIG. 9 does not limit the server. The server may include less or more components than those illustrated in FIG. 9 or combinations thereof, or have a different arrangement of components.

The processor 801 is a control center of the server, which utilizes various interfaces and wires to connect various parts of the server 800. By running or executing the software program and/or modules stored in the memory 802, and by invoking data stored in the memory 802, the various functions and data processing functions may be executed, thus integrally monitoring the server 800. In an embodiment, the processor 801 may include one or more processing cores. In an embodiment, the processor 801 may be integrated with a processor or a modem processor. The processor mainly processes the operation system, a user interface and an application. The modem processor mainly processes wireless communication. It may be understood that, the above modem controller may be not integrated in the processor 801.

The memory 802 may be configured to store software programs or modules. The processor 801 is configured to execute various functional applications and data processes by running the software programs and modules stored in the memory 802.

The communication unit 803 may be configured for receiving and transmitting signals during the process of transmitting and receiving information. In detail, the communication unit 803 receives the signal transmitted by the terminal and hands the data acquisition request to one or more processors 801 for processing. At the same time, the communication unit 803 transmits the feedback signal sent by the processor 801 to the terminal.

The server 800 may further includes a power supply 804 (such as a battery) for providing powers to various parts. Alternatively, the power supply may be logically connected to a power management system and the processor 801, thereby managing a charging, discharging and power consumption via the power management system. The power supply 804 may also include any one or more of a DC (Direct Voltage) or AC (Alternating Voltage) power source, a recharging system, a power failure detection circuit, a power converter or inverter, a power status indicator, and the like.

The server 800 may further includes an input unit 805. The input unit 805 may be configured to receive figures or character information inputted and to generate a keyboard, a mouse, a joystick, an optical or trackball signal input related to a user setup or function control.

The server 800 may further includes a display unit 806. The display unit 806 may be configured to display information inputted by the user or various graphical user interfaces of the server 800, which may include graphics, text, icons, video, and any combination thereof. The display unit 806 may include a display panel. In an embodiment, the display panel may be configured as a liquid crystal display (LCD), an organic light-emitting diode (OLED) and the like.

In embodiments of the present disclosure, the processor 801 in the server 800 loads the executable file corresponding to the process of one or more programs into the memory 802 according to the following instructions, and the processor 801 runs the programs stored in the memory 802 to achieve various functions as follows.

A data synchronization request from a terminal is received.

Current load information is acquired based on the data synchronization request.

A response message is sent to the terminal based on the load information. The response message includes indication information for indicating whether synchronization is permitted.

Target data from the terminal is received and saved based on the indication information.

In some embodiments, the processor 801 achieve various functions as follows. It is determined whether the load amount is greater than a preset threshold. When the load amount is greater than the preset threshold, time information is acquired based on the load amount, and the response message is sent to the terminal based on the time information. The response message further includes the time information.

Embodiments of the present disclosure further provide a storage medium. The storage medium is applicable to a server. The storage medium has stored a plurality of instructions. The plurality of instructions is adaptable to be loaded by a processor to perform the above data synchronization method.

Those skilled in the art should understand that all or part of the blocks in the methods in embodiments may be implemented by a program instructing relevant hardware. The program may be stored in a computer readable memory. The computer readable memory may include a flash drive, a read-only memory (ROM), a random-access memory (RAM), a magnetic disk, an optical disk or the like.

The data synchronization method, the data synchronization device, the storage medium, the electronic device and the server provided by the embodiments of the present disclosure are described in detail. Specific examples are used herein to describe the principles and implementation manners of the present disclosure. The description of the above embodiments is merely used to help understand the method and key idea of the present disclosure. Meanwhile, those skilled in the art may make modifications to the detailed description and application scopes according to ideas of the present disclosure. In view of the above descriptions, the specification should not be construed as limiting the present disclosure.

## Claims

1. A data synchronization method, comprising:
sending a data synchronization request to a server, such that the server acquires load information based on the data synchronization request and returns a response message based on the load information;
receiving the response message from the server, the response message comprising indication information for indicating whether synchronization is permitted;
synchronizing target data to the server when the indication information indicates that the synchronization is permitted.

2. The method of claim 1, wherein the response message further comprises time information corresponding to the indication information, and the method further comprises:
sending the data synchronization request to the server again based on the time information when the indication information is not preset indication information.

3. The method of claim 2, wherein the sending the data synchronization request to the server again based on the time information comprises:
adjusting a synchronization time of the target data based on the time information; and
sending the data synchronization request to the server again based on the adjusted synchronization time.

4. The method of claim 1, before sending the data synchronization request to the server, further comprising:
sending an account login request to the server, the account login request carrying a target backup account and authentication information of the target backup account;
receiving a login response message from the server based on the account login request, and logging into the target backup account based on the login response message.

5. A data synchronization method, comprising:
receiving a data synchronization request from a terminal;
acquiring current load information based on the data synchronization request;
sending a response message to the terminal based on the load information, the response message comprising indication information for indicating whether synchronization is permitted;
receiving and saving target data from the terminal based on the indication information.

6. The method of claim 5, wherein the load information comprises a load amount, and the sending the response message to the terminal based on the load information, comprises:
determining whether the load amount is greater than a preset threshold;
when the load amount is greater than the preset threshold, acquiring time information based on the load amount, and sending the response message to the terminal based on the time information, wherein the response message further comprises the time information.

7. A data synchronization device, comprising:
a request sending module, configured to send a data synchronization request to a server, such that the server acquires load information based on the data synchronization request and returns a response message based on the load information;
an information receiving module, configured to receive the response message from the server, the response message comprising indication information for indicating whether synchronization is permitted; and
a synchronizing module, configured to synchronize target data to the server when the indication information indicates that the synchronization is permitted.

8. The device of claim 7, wherein the response message further comprises time information corresponding to the indication information, and the request sending module is configured to:
send the data synchronization request to the server again based on the time information when the indication information is not preset indication information.

9. The device of claim 8, wherein the request sending module is configured to:
adjust a synchronization time of the target data based on the time information; and
send the data synchronization request to the server again based on the adjusted synchronization time.

10. The device of claim 7, further comprising:
a login request sending module, configured to send an account login request to the server, the account login request carrying a target backup account and authentication information of the target backup account; and
a processing module, configured to login a response message from the server based on the account login request, and log into the target backup account based on the login response message.

11. A data synchronization device, comprising:
a request receiving module, configured to receive a data synchronization request from a terminal;
an information acquiring module, configured to acquire current load information based on the data synchronization request;
an information sending module, configured to send a response message to the terminal based on the load information, the response message comprising indication information for indicating whether synchronization is permitted; and
a data processing module, configured to receive and save target data from the terminal based on the indication information.

12. The device of claim 11, wherein the load information comprises a load amount, and the information sending module is configured to:
determining whether the load amount is greater than a preset threshold;
when the load amount is greater than the preset threshold, acquire time information based on the load amount, and send the response message to the terminal based on the time information, wherein the response message further comprises the time information.

13. A storage medium, applicable to a terminal, and having stored a plurality of instructions thereon, the plurality of instructions being adaptable to be loaded by a processor to perform the data synchronization method.

14. A storage medium, applicable to a server, and having stored a plurality of instructions thereon, the plurality of instructions being adaptable to be loaded by a processor to perform the data synchronization method.

15. An electronic device, comprising a processor and a memory, the processor being electrically coupled to the memory, the memory for storing instructions and data; the processor for performing the following operations:
sending a data synchronization request to a server, such that the server acquires load information based on the data synchronization request and returns a response message based on the load information;
receiving the response message from the server, the response message comprising indication information for indicating whether synchronization is permitted;
synchronizing target data to the server when the indication information indicates that the synchronization is permitted.

16. The electronic device of claim 15, wherein the response message further comprises time information corresponding to the indication information, and the electronic device is further configured to perform the following operations:
sending the data synchronization request to the server again based on the time information when the indication information is not preset indication information.

17. The electronic device of claim 16, wherein the sending the data synchronization request to the server again based on the time information comprises:
adjusting a synchronization time of the target data based on the time information; and
sending the data synchronization request to the server again based on the adjusted synchronization time.

18. The electronic device of claim 16, wherein the electronic device is further configured to, before sending the data synchronization request to the server, perform the following operations:
sending an account login request to the server, the account login request carrying a target backup account and authentication information of the target backup account;
receiving a login response message from the server based on the account login request, and logging into the target backup account based on the login response message.

19. A server, comprising a processor and a memory, the processor being electrically coupled to the memory, the memory for storing instructions and data; the processor for performing the following operations:
receiving a data synchronization request from a terminal;
acquiring current load information based on the data synchronization request;
sending a response message to the terminal based on the load information, the response message comprising indication information for indicating whether synchronization is permitted;
receiving and saving target data from the terminal based on the indication information.

20. The server of claim 19, wherein the load information comprises a load amount,
and the sending the response message to the terminal based on the load information, comprises:
determining whether the load amount is greater than a preset threshold;
when the load amount is greater than the preset threshold, acquiring time information based on the load amount, and sending the response message to the terminal based on the time information, wherein the response message further comprises the time information.
